Europäisches Patentamt

European Patent Office

Office européen des brevets

(19)

(11) Veröffentlichungsnummer : **0 103 921**
**B1**

(12)

# EUROPÄISCHE PATENTSCHRIFT

(45) Veröffentlichungstag der Patentschrift :
30.12.86

(21) Anmeldenummer : 83201212.4

(22) Anmeldetag : 22.08.83

(51) Int. Cl.⁴ : **H 02 H   1/00**

---

(54) **Hochspannungsanlage mit Störlichterfassungseinheit.**

---

(30) Priorität : 31.08.82 CH 5170/82

(43) Veröffentlichungstag der Anmeldung :
28.03.84 Patentblatt 84/13

(45) Bekanntmachung des Hinweises auf die Patenterteilung : 30.12.86 Patentblatt 86/52

(84) Benannte Vertragsstaaten :
CH DE FR LI SE

(56) Entgegenhaltungen :
DE-A- 2 216 238
DE-A- 2 840 790
DE-A- 2 856 188
US-A- 3 754 149

(73) Patentinhaber : BBC Aktiengesellschaft Brown, Boveri & Cie.
Haselstrasse
CH-5401 Baden (CH)

(72) Erfinder : Kopainsky, Jürgen, Dr.
Hagenbüchlerstrasse 17
CH-5442 Fislisbach (CH)
Erfinder : Müri, Kurt
Obergasse 5
CH-5301 Station Siggenthal (CH)

# Beschreibung

Die Erfindung betrifft eine metallgekapselte, isoliermittelgefüllte Hochspannungsanlage gemäss dem Oberbegriff des Patentanspruchs 1.

Eine solche Hochspannungsanlage ist etwa aus der DE-A-28 56 188 bekannt. Die bekannte Hochspannungsanlage ist als Schaltanlage mit gegeneinander abgeschotteten Räumen ausgebildet, in denen jeweils ein Lichtleiter eingeführt ist, über den das bei einer Störlichtbogenentladung auftretende Störlicht aus dem Inneren jedes Raumes an eine eine Fotodiode enthaltende fotoelektrische Verstärkerschaltung geführt wird, in der das herausgeführte Störlicht in elektrische Impulse umgewandelt wird. Die elektrischen Impulse lösen über zwischengeschaltete Verstärkerstufen ein die Störlichtbögen kurzschliessendes Schaltglied aus. Eine solche Anlage ist jedoch verhältnismässig aufwendig, da sie neben dem im allgemeinen bereits vorhandenen, Messwandler und Schalter enthaltenden, Schutzsystem noch ein weiteres auf Schaltglieder einwirkendes Schutzsystem benötigt. Darüber hinaus sind bei dieser Anlage unerwünschte Auslösungen des auf Störlicht ansprechenden Schutzsystems, etwa infolge des Auftretens von Streulicht, nicht ausgeschlossen.

Es ist daher Aufgabe der Erfindung, eine Hochspannungsanlage der gattungsgemässen Art zu schaffen, bei der selbst bei geringen Störlichtbogenentladungen eine genaue Fehlerortung möglich ist, und gleichzeitig eine Fehlanzeige infolge ausserbetrieblicher Einflüsse mit Sicherheit ausgeschlossen ist.

Die vorstehende Aufgabe wird durch die im Kennzeichen von Patentanspruch 1 angegebenen Merkmale gelöst. Der Erfindungsgegenstand zeichnet sich durch eine rasche und zuverlässige Ortung von Störlicht erzeugenden Fehlern aus, insbesondere lässt sich das Störlicht bereits in der Entstehungsphase des Fehlers mit Sicherheit erfassen. Darüber hinaus lässt sich die erfindungsgemässe Hochspannungsanlage durch Nachrüstung bereits vorhandener Hochspannungsanlagen mit verhältnismässig geringem Aufwand herstellen.

Vorteilhafte Weiterbildungen des Erfindungsgegenstandes sind in den Unteransprüchen angegeben.

In der Zeichnung ist ein Ausführungsbeispiel des Erfindungsgegenstandes vereinfacht dargestellt.

Es zeigt :

Figur 1 ein stark vereinfachtes Blockschaltbild einer erfindungsgemäss ausgeführten Hochspannungsschaltanlage mit einem Schutzsystem und einer Störlichterfassungs- und Auswerteeinheit,

Figur 2 ein Blockschaltbild der Störlichterfassungs- und Auswerteeinheit der Hochspannungsanlage gemäss Fig. 1, und

Figur 3 ein Schaltbild einer fotoelektrischen Verstärkerschaltung der Störlichterfassungs- und Auswerteeinheit gemäss Fig. 2.

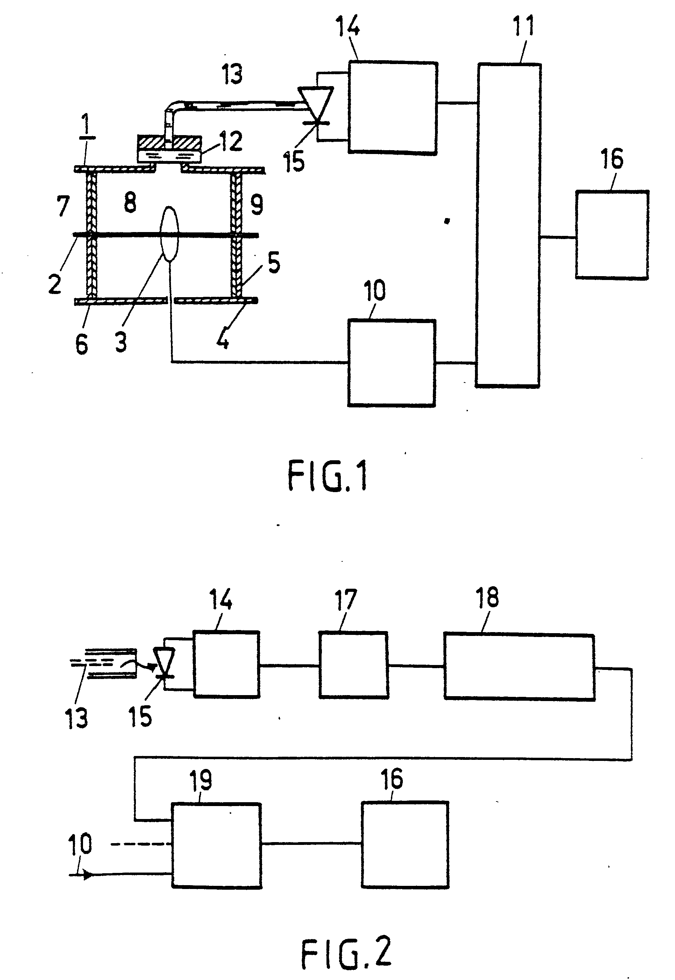

In Fig. 1 ist mit 1 eine metallgekapselte Hochspannungsschaltanlage bezeichnet, deren unter Hochspannung stehender Innenleiter 2 von einem Stromwandler 3 auf Ueberstrom, und deren von einer geerdeten Metallkapselung 4 und jeweils zwei Isolatoren, etwa 5 und 6, umschlossenen Teilinnenräume 7, 8, 9 auf Störlichtbogenentladungen zwischen dem Innenleiter 2 und der Metallkapselung 4 überwacht werden. Das vom Stromwandler 3 ermittelte Signal wird auf den Eingang einer dem Stromwandler 3 nachgeschalteten Schutz-Aus-Einheit 10 gegeben, deren Ausgang mit einem ersten Eingang einer Impulsverarbeitungseinheit 11 verbunden ist. Das von einer unerwünschten Störlichtbogenentladung im abgedunkelten Teilinnenraum 8 der Hochspannungsschaltanlage 1 ausgehende Licht wird von einem auf einem transparenten und etwa aus Glas bestehendem Fenster 12 angebrachten Lichtleiter 13 in eine fotoelektrische Verstärkerschaltung 14 geführt, in der es in einer Fotodiode 15 in elektrische Signale umgewandelt und die umgewandelten elektrischen Signale verstärkt werden. Der Ausgang der fotoelektrischen Verstärkerschaltung 14 ist mit einem zweiten Eingang der Impulsverarbeitungseinheit 11 verbunden. Die Impulsverarbeitungseinheit 11 wirkt auf einen Eingang einer Ausgabeeinheit 16, welche den Zustand in dem von den Isolatoren 5 und 6 sowie der Metallkapselung 4 begrenzten Teilinnenraum 8 der Hochspannungsschaltanlage 1 anzeigt. Entsprechende Störlichterfassungs- und Verarbeitungseinheiten sind auch an den anderen Teilinnenräumen, wie etwa den Teilinnenräumen 7 und 9, der Hochspannungsschaltanlage vorgesehen.

In Fig. 2 ist die Impulsverarbeitungseinheit 11 ausführlicher dargestellt. Sie weist einen Komparator 17, eine Vorrichtung zur Verlängerung von Impulsen 18, und eine vorzugsweise als UND-Gatter 19 ausgebildete Impulssperre auf. In der Impulsverarbeitungseinheit 11 werden die vom Lichtleiter 13 optisch erfassten und von der fotoelektrischen Verstärkerschaltung 14 umgewandelten und verstärkten Signale im Komparator 17 in logische Signale umgewandelt. Die logischen Signale werden in der Vorrichtung zur Impulsverlängerung 18 auf mehrere 100 ms gedehnt und auf einen ersten Eingang des UND-Gatters 19 gegeben. Am zweiten Eingang des UND-Gatters 19 werden Freigabesignale von der Schutz-Aus-Einheit 10 angelegt. Von der Ausgabeeinheit 16 wird daher dann eine unerwünschte Störlichtbogenentladung in einem Teilinnenraum, z. B. 8, der Hochspannungsschaltanlage 1 angezeigt, wenn der Schutz der Hochspannungsschaltanlage angesprochen hat und die Schutz-Aus-Einheit 10 daher ein (ebenfalls logisches und auf das logische Signal der Störlichterfassungs- und Verarbeitungseinheit abgestimmtes) Signal an den einen Eingang des UND-Gatters 19 anlegt, und wenn gleichzeitig unerwünschte Störlichtbögen in diesem Teilinnenraum brennen, welche das Anlegen eines weiteren logischen Signals am anderen Eingang des UND-Gatters 19 bewirken.

Hiermit wird mit Sicherheit vermieden, dass die Ausgabeeinheit 16 einen Fehler anzeigt, wenn im Teilinnenraum 8 eine Leuchterscheinung auftritt, die nicht auf einen Störlichtbogen zurückzuführen ist, z. B. auf den Einfall von Tageslicht bei Entfernen einer auf dem Fenster 12 angebrachten (in der Fig. 1 nicht bezeichneten) Abdeckklappe. Ausserdem verhindert dieser Aufbau eine Fehlanzeige der Ausgabeeinheit 16, wenn durch elektromagnetische Störungen die Impulsverarbeitungseinheit 11 ein Signal liefern sollte, obwohl kein Licht auf die Fotodiode 15 fällt.

Zur Vermeidung der Fehlanzeige infolge eines Fehlers, der etwa ausserhalb der Hochspannungsschaltanlage 1, beispielsweise in einer Stromeinspeisung oder in einem Verbraucher, aufgetreten ist, weist die Impulsverarbeitungseinheit 11 eine in den Figuren nicht dargestellte Blockiereinrichtung auf, welche auf ein den Schaltzustand des Leistungsschalters der Hochspannungsschaltanlage 1 vermittelndes Signal anspricht. Signal und Blockiereinrichtung sind derart aufeinander abgestimmt, dass für die Dauer der Schaltereigenzeit (d. h. der mechanischen Schalterzeit sowie der Schaltlichtbogenbrenndauer) von maximal 50 ms die Impulsverarbeitungseinheit 11 blockiert ist.

Durch die vorstehend beschriebenen Massnahmen lassen sich auch schwache Störlichtbogen mit grosser Sicherheit erfassen. Insbesondere ist es möglich, äusserst empfindliche Lichtsensoren einzusetzen. Besonders bewährt hat es sich hierbei, wenn die Fotodiode 15 als Fotoelement geschaltet und im Leerlauf betrieben ist, da hierdurch eine besonders wirkungsvolle Verstärkung schwacher Lichtsignale erreicht wird.

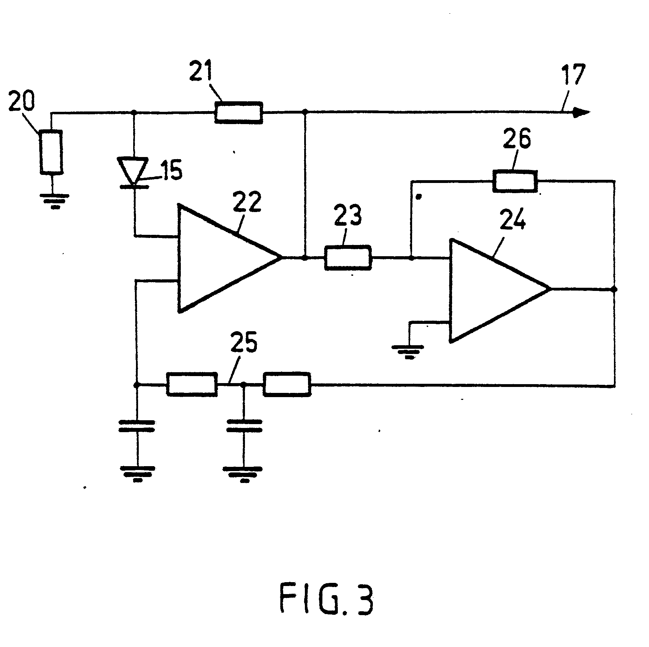

In Fig. 3 ist eine entsprechende fotoelektrische Verstärkerschaltung angegeben. Bei dieser Schaltung ist die als Fotoelement geschaltete Fotodiode 15 zwischen dem Verbindungspunkt zweier hintereinandergeschalteter Widerstände 20 und 21 und einem ersten Eingang eines Verstärkers 22 angeordnet. Ein Anschluss des Widerstandes 20 liegt auf Nullpotential, ein Anschluss des Widerstandes 21 ist mit dem Ausgang des Verstärkers 22 verbunden. Der Ausgang des Verstärkers 22 ist mit dem Eingang eines aus Widerständen 23 und 26 sowie einem Verstärker 24 gebildeten invertierenden Verstärkers verbunden. Der Ausgang des zweiten Verstärkers 24 ist über ein vorzugsweise zwei RC-Glieder enthaltendes Filter 25 mit dem zweiten Eingang des Verstärkers 22 verbunden. Der Verbindungspunkt zwischen dem ersten Verstärker 22 und dem Widerstand 23 steht mit dem Eingang des Komparators 17 in Verbindung.

Das bei Auftreten eines Störlichtbogens vom Lichtleiter 13 übertragene Störlichtsignal wird von der Fotodiode 15 in eine Fotospannung umgewandelt, und durch die die Widerstände 20 und 21 sowie den Verstärker 22 enthaltende Schaltung dem Verhältnis der beiden Widerstände 21 zu 22 proportional verstärkt. Durch den Verstärker 24 wird die verstärkte Fotospannung invertiert, während durch das Filter 25 das bei Dunkelheit wegen des grossen Innenwiderstandes der Fotodiode 15 gebildete Gleichspannungssignal eliminiert wird.

Zur Detektion extrem kleiner Störlichtbögen sowie zur besonders raschen Erfassung von Störlichtbögen während ihrer Entstehungsphase, eignen sich vor allem Fotodioden, deren Empfindlichkeit im blauen Spektralbereich hoch ist und beispielsweise bei 400 nm mehr als 40 % der — üblicherweise im infraroten Spektralbereich liegenden — maximalen Empfindlichkeit beträgt, wie etwa die Fotodiode des Typs BPW 20 der Fa. Telefunken. Den gleichen Vorteil weisen ferner auch Lichtleiter auf, deren Faserquerschnitt gross ist und deren Transmission im blauen Spektralbereich verglichen mit ihrer maximalen spektralen Transmission hoch ist, wie etwa Kunststofflichtleiter des Typs HFBR-3500 der Fa. Hewlett-Packard mit einem verglichen mit Glasfaser-Lichtleitern mehrfach grösseren Faserquerschnitt von ca. 1 mm$^2$ und einer beispielsweise bei 450 nm noch mehr als 5 % der maximalen (im gelben Spektralbereich befindlichen) Transmission betragenden Transmission. In einer Verstärkerschaltung mit Widerständen 20, 21, 23, 26 von der Reihe nach beispielsweise 0,1 ; 10 ; 100 ; 100 kΩ und RC-Gliedern im Filter 25 von beispielsweise 1 MΩ und 10 μF lassen sich durch den Einsatz der vorstehend erwähnten als Fotoelement geschalteten blauempfindlichen Fotodiode und des im blauen Spektralbereich eine hohe Transmission aufweisenden Lichtleiters auch sehr schwache Störlichtsignale mit Sicherheit erfassen und unabhängig von betrieblichen Schalthandlungen und anderen Einflussgrössen signalisieren.

Die Erfindung ist selbstverständlich nicht auf Hochspannungsschaltanlagen beschränkt, sondern bezieht sich auf alle Hochspannungsanlagen, in denen die elektrischen Versager in isoliermittelgefüllten Innenräumen auftreten, die im Normalbetrieb dunkel sind, wie etwa Leistungstransformatoren, Transformatorstufenschalter, Generatoren, gekapselte Mittelspannungsschaltfelder, Bahnstufenschalter oder Sender.

**Patentansprüche**

1. Metallgekapselte, isoliermittelgefüllte Hochspannungsanlage mit einem Leistungsschalter und Stromwandler (3) enthaltenden, einen hochspannungsführenden Teil (2) der Anlage auf Überstrom überwachenden Schutzsystem (3, 10) sowie mit gegeneinander abgeschotteten Teilinnenräumen (z. B. 8), an denen jeweils mindestens ein Lichtleiter (13) zur optischen Erfassung von Störlichtbogenentladungen zwischen dem hochspannungsführenden Teil (2) und der Metallkapselung (4) vorgesehen ist, und mit einer mit dem Lichtleiter (13) gekoppelten Auswertevorrichtung, enthaltend eine fotoelektrische Verstärkerschaltung (14) zur Erzeugung störlichtabhängiger elektrischer Impulse, eine Impulsverarbeitungsvorrichtung (11) und eine den Zustand jedes Teilinnenraumes (z. B. 8) signalisierenden Ausgabeeinheit (16), dadurch gekennzeichnet, dass der fotoelektrischen Verstärkerschaltung (14) ein die elektrischen Impulse in logische Signale umwandelnder Komparator (17) nachgeschaltet ist, und dass zwischen Komparator (17) und Ausgabeeinheit (16) eine Impulssperre (19) mit zwei Eingängen vorgesehen ist, deren einer Eingang mit dem Ausgang des Komparators (17) und derer anderer Eingang mit dem Schutzsystem derart in Wirkverbindung steht, daß die Impulssperre (19) die Signale aus dem Komparator (17) an die Ausgabeeinheit (16) nur freigibt, wenn das Schutzsystem (3, 10) einen Überstrom ermittelt.

2. Hochspannungsanlage nach Anspruch 1, dadurch gekennzeichnet, dass die Impulssperre ein UND-Gatter (19) enthält, dessen einer Eingang mit dem Ausgang einer dem Komparator (17) nachgeschalteten Einrichtung zur Impulsverlängerung (18) und dessen anderer Eingang mit dem Ausgang einer im Schutzsystem vorgesehenen Schutz-Aus-Einheit (10) verbunden ist.

3. Hochspannungsanlage nach einem der Ansprüche 1 oder 2, dadurch gekennzeichnet, dass die fotoelektrische Verstärkerschaltung (14) eine im Leerlauf betriebene Fotodiode (15) aufweist.

4. Hochspannungsanlage nach Anspruch 3, dadurch gekennzeichnet, dass die fotoelektrische Verstärkerschaltung (14) zwei Verstärker (22, 24) aufweist, dass ein Ausgang eines mit der Fotodiode (15) eingangsseitig gekoppelten ersten (22) auf einen Eingang eines zweiten (24) der beiden Verstärker wirkt, und dass der Ausgang des zweiten (24) der beiden Verstärker über ein Filter (25) mit einem Eingang des ersten Verstärkers (22) verbunden ist.

5. Hochspannungsanlage nach einem der Ansprüche 3 oder 4, dadurch gekennzeichnet, dass die Fotodiode (15) im blauen Spektralbereich eine verglichen mit ihrer maximalen spektralen Empfindlichkeit hohe Empfindlichkeit aufweist.

6. Hochspannungsanlage nach Anspruch 5, dadurch gekennzeichnet, dass der Lichtleiter (13) im blauen Spektralbereich eine verglichen mit seiner maximalen spektralen Transmission hohe Transmission aufweist.

7. Hochspannungsanlage nach Anspruch 1 mit einem in einem der Teilinnenräume (7, 8, 9) vorgesehenen Leistungsschalter, dadurch gekennzeichnet, dass die Impulsverarbeitungsvorrichtung (11) eine Blockiervorrichtung aufweist, welche die Impulsverarbeitungsvorrichtung (11) während des Ansprechens des Leistungsschalters sperrt.

## Claims

1. Metal-encapsulated high-voltage system filled with an insulating material, comprising a protective system (3, 10) which contains a circuit breaker and current transformer (3) and monitors a high-voltage conducting section (2) of the system for overcurrent, and having internal compartments (e. g. 8) which are partitioned off against each other and at which in each case at least one light guide (13) for optically detecting accidental arc discharges between the high-voltage conducting section (2) and the metal encapsulation (4) is provided, and having an evaluating device which is coupled to the light guide (13) and contains a photoelectric amplifier circuit (14) for generating accidental-light-dependent electric pulses, a pulse processing device (11) and an output unit (16) signalling the condition of each internal compartment (e. g. 8), characterized in that the photoelectric amplifier circuit (14) is followed by a comparator (17) which converts the electric pulses into logical signals and that between the comparator (17) and output unit (16) a pulse inhibitor (19) having two inputs is provided, one input of which is effectively connected to the output of the comparator (17) and the other input of which is effectively connected to the protection system, in such a manner that the pulse inhibitor (19) releases the signals from the comparator (17) to the output unit (16) only when the protective system (3, 10) detects an overcurrent.

2. High-voltage system according to Claim 1, characterized in that the pulse inhibitor contains an AND gate (19) one input of which is connected to the output of a device, following the comparator (17), for extending the pulse length (18) and the other input of which is connected to the output of a protective circuit breaker (10) which is provided in the protective system.

3. High-voltage system according to one of Claims 1 or 2, characterized in that the photoelectric amplifier circuit (14) displays a photodiode (15) which is operated in a floating condition.

4. High-voltage system according to Claim 3, characterized in that the photoelectric amplifier circuit (14) displays two amplifiers (22, 24), that an output of a first amplifier (22), the input of which is coupled to the photodiode (15), acts on an input of a second amplifier (24) of the two amplifiers and that the output of the second amplifier (24) of the two amplifiers is connected via a filter (25) to an input of the first amplifier (22).

5. High-voltage system according to one of Claims 3 or 4, characterized in that the photodiode (15) displays a sensitivity which is high in the blue spectral range compared with its maximum spectral sensitivity.

6. High-voltage system according to Claim 5, characterized in that the light guide (13) has a transmissivity which is high in the blue spectral range compared with its maximum spectral transmissivity.

7. High-voltage system according to Claim 1, having a circuit breaker which is provided in one of the internal compartments (7, 8, 9), characterized in that the pulse processing device (11) displays a blocking device which blocks the pulse processing device (11) during the period of response of the circuit breaker.

**Revendications**

1. Installation à haute tension remplie d'agent isolant et à blindage métallique comportant un système de protection (3, 10) contenant un interrupteur de puissance et un transformateur de courant (3) et surveillant une partie amenant la haute tension (2) de l'installation pour déceler les surintensités, ainsi que des chambres internes partielles cloisonnées les unes par rapport aux autres (par exemple 8), à chacune desquelles est agencé au moins un conducteur de lumière (13) destiné à détecter optiquement les décharges en arc perturbatrices entre la partie amenant la haute tension (2) et le blindage métallique (4), ainsi qu'un dispositif d'évaluation connecté au conducteur de lumière (13), contenant un circuit amplificateur photoélectrique (14) pour produire des impulsions électriques dépendant de la lumière de perturbation, un dispositif de traitement d'impulsions (11) et une unité de sortie (16) affichant l'état de chaque chambre interne partielle (par exemple 8), caractérisée en ce que le circuit amplificateur photoélectrique (14) est suivi d'un comparateur (17) convertissant les impulsions électriques en signaux logiques et, il est prévu entre le comparateur (17) et l'unité de sortie (16), un dispositif de blocage d'impulsions (19) à deux entrées, dont une première entrée est connectée à la sortie du comparateur (17) et dont l'autre entrée est en liaison active avec le système de protection de manière telle que le dispositif de blocage d'impulsions (19) ne libère les signaux du comparateur (17) au niveau de l'unité de sortie (16) que lorsque le système de protection (3, 10) détermine une surintensité.

2. Installation à haute tension suivant la revendication 1, caractérisée en ce que le dispositif de blocage d'impulsions comprend un circuit-porte ET (19) dont une entrée est connectée à la sortie d'un dispositif suivant le comparateur (17) pour allonger les impulsions (18) et dont l'autre entrée est connectée à la sortie d'une unité de protection-coupure (10) prévue dans le système de protection.

3. Installation à haute tension suivant la revendication 1 ou 2, caractérisée en ce que le circuit amplificateur photoélectrique (14) présente une photodiode (15) utilisée en circuit ouvert.

4. Installation à haute tension suivant la revendication 3, caractérisée en ce que le circuit amplificateur photoélectrique (14) comporte deux amplificateurs (22, 24), une sortie d'un premier amplificateur (22) couplé par son entrée à la photodiode (15) agit sur une entrée d'un second amplificateur (24) et la sortie du second (24) des deux amplificateurs est connectée par l'intermédiaire d'un filtre (25) à une entrée du premier amplificateur (22).

5. Installation à haute tension suivant la revendication 3 ou 4, caractérisée en ce que la photodiode (15) présente dans le domaine spectral bleu une sensibilité élevée en comparaison de sa sensibilité spectrale maximale.

6. Installation à haute tension suivant la revendication 5, caractérisée en ce que le conducteur de lumière (13) présente dans la zone spectrale du bleu une transmission élevée en comparaison de sa transmission spectrale maximale.

7. Installation à haute tension suivant la revendication 1 comportant un interrupteur de puissance prévu dans une des chambres internes partielles (7, 8, 9), caractérisée en ce que le dispositif de traitement d'impulsions (11) comporte un dispositif de blocage qui bloque le dispositif de traitement d'impulsions (11) pendant la réaction de l'interrupteur de puissance.

FIG.1

FIG.2

FIG.3